(19)

Europäisches
Patentamt
European
Patent Office
Office européen
des brevets

(11) **EP 4 575 910 A1**

(12) **EUROPEAN PATENT APPLICATION**

(43) Date of publication:
**25.06.2025 Bulletin 2025/26**

(21) Application number: **24218898.5**

(22) Date of filing: **11.12.2024**

(51) International Patent Classification (IPC):
**G06N 3/084** (2023.01)    **G06N 3/008** (2023.01)
**G06N 3/0475** (2023.01)    **G06N 3/0985** (2023.01)

(52) Cooperative Patent Classification (CPC):
**G06N 3/084; G06N 3/008; G06N 3/045;**
**G06N 3/0475; G06N 3/0985**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.12.2023 IN 202321087298**

(71) Applicant: **Tata Consultancy Services Limited
Maharashtra (IN)**

(72) Inventors:
• **SIVAKUMAR, Narendran
London, SW1X 7HS (GB)**
• **VISWANATHAN, Sankaranarayanan
600113 Chennai, Tamil Nadu (IN)**
• **KANNAN, Radhika
600113 Chennai, Tamil Nadu (IN)**
• **RAMASAMY VENKADA, Subramanian
560066 Bangalore, Karnataka (IN)**

(74) Representative: **Goddar, Heinz J. et al
Boehmert & Boehmert
Anwaltspartnerschaft mbB
Pettenkoferstrasse 22
80336 München (DE)**

(54) **HUMAN INTUITION BASED DECODER NEURAL NETWORK (THETA-DEC-NN) FOR ARTIFICIAL INTELLIGENCE (AI) MODEL REFINEMENT**

(57)    Existing AutoMI, approaches fail to capture human intuition and domain alignment as part of the ML model development. Embodiments of the present disclosure provide method and system comprising Theta-DecNN for AI Model Refinement. Theta-DecNN applies three level process for model building by integrating and optimizing a human intuition factor($\theta$), thereafter aligning the AI model to a domain of interest. Theta-DecNN utilizes iterative feedback mechanisms at each level to extract the human intuition form input task, further optimize the human intuition factor based on Historical tuning data, live performance metrics to obtain a trained AI model for the task. At the third level the train AI model is finetuned to align with domain of the task based on domain specific function, which is optimized by tuning hyperparameter to generate human intuition based domain optimized AI model enabling outputs that are accurate, and contextually and intuitively aligned with complex human thought processes.

EP 4 575 910 A1

FIG. 1B

**Description**

CROSS-REFERENCE TO RELATED APPLICATIONS AND PRIORITY

The present application claims priority to Indian application no. 202321087298, filed on December 20, 2023.

TECHNICAL FIELD

The embodiments herein generally relate to the field of Artificial Intelligence (AI) and, more particularly, to a method and system for Human intuition based Decoder Neural Network (Theta-DecNN) for Artificial Intelligence (AI) Model Refinement.

BACKGROUND

Traditional methods in artificial intelligence (AI) model development, fine-tuning, and optimization heavily rely on human expertise and intuition. This approach, while effective, often lacks scalability and can introduce inefficiencies. Automatic Machine Learning (AutoML) framework introduces automation and simplifies each step in the machine learning process, from handling a raw data set to deploying a practical ML model, unlike traditional machine learning, where models are developed manually, and each step in the process must be handled separately. It can be understood that AutoML and similar frameworks optimize machine learning pipelines through genetic programming.

Simulating human intuition in AI model development, particularly in fine-tuning, domain alignment, hyperparameter optimization is hardly explored. This limitation in AI/ML development automation needs to be addressed to bring in efficiency and scalability in AL model development.

SUMMARY

Embodiments of the present disclosure present technological improvements as solutions to one or more of the above-mentioned technical problems recognized by the inventors in conventional systems.

For example, in one embodiment, a method for human intuition based Artificial Intelligence (AI) model fine-tuning is provided.

The method includes receiving, via a Human Intuition based Decoder-Neural Network (Theta-DecNN) implementing a Self-Regulated Human Intuition Emulation Mechanism (SRHIEM), an input sequence defining a task in natural language for which an Artificial Intelligence (AI) model is to be fine-tuned.

Further, the method includes deriving an initial intuition value from a reference intuition value of a human intuition factor ($\theta$) associated with the input sequence by: processing the input sequence by the Theta-DecNN to obtain an output sequence emulating human intuition present in the input sequence, wherein a self-attention mechanism of the Theta-DecNN is modified in each iteration of a plurality of iterations ( iterations) using a first iterative feedback mechanism of the SRHIEM based on change in the human intuition factor ($\theta$). The human intuition factor ($\theta$) is updated from the reference intuition value in a first iteration to the initial intuition value in a final iteration based on learning rate of the Theta-DecNN, and a gradient of a feedback function. The feedback function compares the output sequence with a human-like intuitive criteria.

Furthermore, the method includes determining an optimized human intuition factor ($\theta^*$) and training the AI model in accordance with the optimized human intuition factor ($\theta^*$) by applying a second iterative feedback mechanism of the SRHIEM that iteratively fine tune the initial intuition value based on historical tuning data H, and live performance metrics P, wherein live performance of the AI model trained on the initial intuition factor is analyzed in accordance with target metrics defined for the AI model in every iteration;

Further, the method includes fine-tuning the trained AI model having an intuition-like capability obtained via the optimized intuition factor to align to a target domain using a third iterative feedback mechanism of the SRHIEM by aligning the optimized intuition factor with the target domain to obtain a domain aligned optimized intuition factor based on a domain-specific alignment function that incorporates contextual cues into feedback loop of the third iterative feedback mechanism.

Further, the method includes optimizing a plurality of hyperparameters (hyperparameters) of the fine-tuned AI model using a hyperparameter optimization module implementing a fourth iterative feedback mechanism that utilizes i) predictive impact analysis implementing a combination of regression analysis and decision trees to predict how changes in each of the hyperparameter affect performance of the AI model, ii) performance benchmarking for effectiveness of configuration of the hyperparameters based on historical data, iii) feedback-driven adjustment loop enabling the fine-tuned AI model to learn from each adjustment of the hyperparameters, and iv) historical data continuously mined for insights.

In another aspect, a system for human intuition based Artificial Intelligence (AI) model fine-tuning is provided. The system comprises a memory storing instructions; one or more Input/Output (I/O) interfaces; and one or more hardware processors coupled to the memory via the one or more I/O interfaces, wherein the one or more hardware processors are configured by the instructions to receive, via a Human Intuition based Decoder-Neural Network (Theta-DecNN) implementing a Self-Regulated Human Intuition Emulation Mechanism (SRHIEM), an input sequence defining a task in natural language for which an Artificial Intelligence (AI) model is to be fine-tuned.

Further, the one or more hardware processors are configured to derive an initial intuition value from a reference intuition value of a human intuition factor ($\theta$) associated with the input sequence by: processing the input sequence by the Theta-DecNN to obtain an output sequence emulating human intuition present in the input sequence, wherein a self-attention mechanism of the Theta-DecNN is modified in each iteration of the a plurality of iterations using a first iterative feedback mechanism of the SRHIEM based on change in the human intuition factor ($\theta$). The human intuition factor ($\theta$) is updated from the reference intuition value in a first iteration to the initial intuition value in a final iteration based on learning rate of the Theta-DecNN, and a gradient of a feedback function. The feedback function compares the output sequence with a human-like intuitive criteria.

Furthermore, the one or more hardware processors are configured to determine an optimized human intuition factor ($\theta^*$) and training the AI model in accordance with the optimized human intuition factor ($\theta^*$) by applying a second iterative feedback mechanism of the SRHIEM that iteratively fine tune the initial intuition value based on historical tuning data H, and live performance metrics P, wherein live performance of the AI model trained on the initial intuition factor is analyzed in accordance with target metrics defined for the AI model in every iteration;

Further, the one or more hardware processors are configured to fine-tune the trained AI model having an intuition-like capability obtained via the optimized intuition factor to align to a target domain using a third iterative feedback mechanism of the SRHIEM by aligning the optimized intuition factor with the target domain to obtain a domain aligned optimized intuition factor based on a domain-specific alignment function that incorporates contextual cues into feedback loop of the third iterative feedback mechanism.

Further, the one or more hardware processors are configured to optimize a plurality of hyperparameters of the fine-tuned AI model using a hyperparameter optimization module implementing a fourth iterative feedback mechanism that utilizes i) predictive impact analysis implementing a combination of regression analysis and decision trees to predict how changes in each of the hyperparameter affect performance of the AI model, ii) performance benchmarking for effectiveness of configuration of the hyperparameters based on historical data, iii) feedback-driven adjustment loop enabling the fine-tuned AI model to learn from each adjustment of the hyperparameters, and iv) historical data continuously mined for insights.

In yet another aspect, there are provided one or more non-transitory machine-readable information storage mediums comprising one or more instructions, which when executed by one or more hardware processors causes a method for human intuition based Artificial Intelligence (AI) model fine tuning.

The method includes receiving, via a Human Intuition based Decoder-Neural Network (Theta-DecNN) implementing a Self-Regulated Human Intuition Emulation Mechanism (SRHIEM), an input sequence defining a task in natural language for which an Artificial Intelligence (AI) model is to be fine-tuned.

Further, the method includes deriving an initial intuition value from a reference intuition value of a human intuition factor ($\theta$) associated with the input sequence by: processing the input sequence by the Theta-DecNN to obtain an output sequence emulating human intuition present in the input sequence, wherein a self-attention mechanism of the Theta-DecNN is modified in each iteration of a plurality of iterations using a first iterative feedback mechanism of the SRHIEM based on change in the human intuition factor ($\theta$). The human intuition factor ($\theta$) is updated from the reference intuition value in a first iteration to the initial intuition value in a final iteration based on learning rate of the Theta-DecNN, and a gradient of a feedback function. The feedback function compares the output sequence with a human-like intuitive criteria.

Furthermore, the method includes determining an optimized human intuition factor ($\theta^*$) and training the AI model in accordance with the optimized human intuition factor ($\theta^*$) by applying a second iterative feedback mechanism of the SRHIEM that iteratively fine tune the initial intuition value based on historical tuning data H, and live performance metrics P, wherein live performance of the AI model trained on the initial intuition factor is analyzed in accordance with target metrics defined for the AI model in every iteration;

Further, the method includes fine-tuning the trained AI model having an intuition-like capability obtained via the optimized intuition factor to align to a target domain using a third iterative feedback mechanism of the SRHIEM by aligning the optimized intuition factor with the target domain to obtain a domain aligned optimized intuition factor based on a domain-specific alignment function that incorporates contextual cues into feedback loop of the third iterative feedback mechanism.

Further, the method includes optimizing a plurality of hyperparameters, also referred to as hyperparameters herein after, of the fine-tuned AI model using a hyperparameter optimization module implementing a fourth iterative feedback mechanism that utilizes i) predictive impact analysis implementing a combination of regression analysis and decision trees to predict how changes in each of the hyperparameter affect performance of the AI model, ii) performance benchmarking for effectiveness of configuration of the hyperparameters based on historical data, iii) feedback-driven adjustment loop enabling the fine-tuned AI model to learn from each adjustment of the hyperparameters, and iv) historical data continuously mined for insights.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system comprising Human intuition based Decoder Neural Network (Theta-DecNN) for Artificial Intelligence (AI) Model Refinement, in accordance with some embodiments of the present disclosure.
FIG. 1B illustrates an architectural overview of the system of FIG. 1A, in accordance with some embodiments of the present disclosure.
FIGS. 2A and 2B (collectively referred as FIG. 2) is a flow diagram illustrating a method comprising Human intuition based Decoder Neural Network (Theta-DecNN) for Artificial Intelligence (AI) Model Refinement, using the system depicted in FIG. 1A and 1B, in accordance with some embodiments of the present disclosure.
FIGS. 3A and 3B (collectively referred to as FIG. 3) illustrates a detailed process flow of the system 100 for AI model development in conjunction with FIG. 2, in accordance with some embodiments of the present disclosure.
FIG. 4 illustrates architecture integrating the human intuition factor in the Theta-DecNN of the system 100, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Existing Automatic machine learning (AutoML) approaches fail to capture human intuition and domain alignment as part of automated ML model development. Embodiments of the present disclosure provide a method and system comprising Human intuition based Decoder Neural Network (Theta-DecNN) for Artificial Intelligence (AI) Model Refinement. The Theta-DecNN disclosed herein applies a three level process for AI model building by integrating and optimizing a human intuition factor (θ) and thereafter aligning the AI model to a domain of interest. The Theta-DecNN, which is a Decoder-only generative AI (Gen AI) model, utilizes iterative feedback mechanisms at each level to extract the human intuition from input task, further optimizes the human intuition factor based on Historical tuning data (H), live performance metrics (P) obtain a trained AI model for the task. At the third level the train AI model is finetuned to align with domain of the task based on a domain specific function. As understood, attention drives outcomes and by forcing the attention head of the Theta-DecNN to look at theta, the outcomes are being influenced by theta.

Example input tasks to develop AI model aligned to the domain by understanding the human intuition in the task:

- Personalized Content Recommendation: Developing a recommendation system that tailors content suggestions (like movies, books, or music) to individual users based on their past preferences and behavior.
- Medical Image Analysis: Training a model to analyze medical images, such as MRI scans or X-rays, to assist in early detection and diagnosis of diseases.
- Automated Customer Support: Creating a chatbot capable of handling customer queries in various domains, fine-tuning it to understand and respond to specific industry j argon or customer sentiments.

Once a domain aligned AI model that incorporates human intuition is obtained, it is further optimized by tuning hyperparameter to generate a human intuition based domain optimized AL model enabling the model to produce outputs that are not only accurate but also contextually and intuitively aligned with complex human thought processes. The AI model development pipeline disclosed herein is used for finetuning and hyperparameter optimization Generative AI models such as Generative Adversarial Networks (GANs) that can create visual and multimedia artifacts from both imagery and textual input data, Transformer-based models such as Generative Pre-Trained (GPT) language models that can use information gathered and create textual content, and the like.

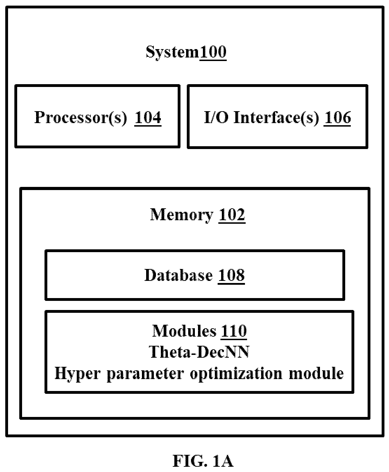

Referring now to the drawings, and more particularly to FIGS. 1A through 4, where similar reference characters denote corresponding features consistently throughout the figures, there are shown preferred embodiments, and these embodiments are described in the context of the following exemplary system and/or method.

FIG. 1A is a functional block diagram of a system 100, for Human intuition based Decoder Neural Network (Theta-DecNN) for Artificial Intelligence (AI) Model Refinement, in accordance with some embodiments of the present disclosure. In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface for interactive exchange and human feedback to automatically refine human intuition factor. The user interface also enables receiving the natural language task for which the AI model has to be developed (fine-tuned). The I/O interface 106 can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110 such as the Theta-DecNN for and the Hyperparameter optimization module.

The plurality of modules 110 include programs or coded instructions that supplement applications or functions performed by the system 100 for executing different steps involved in the process AI Model Refinement using of Human intuition based Decoder Neural Network (Theta-DecNN), being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system 100 and methods of the present disclosure.

Further, the memory 102 includes a database 108. The database (or repository) 108 may include a plurality of abstracted pieces of code for refinement and data that is processed, received, or generated as a result of the execution of the plurality of modules in the module(s) 110.

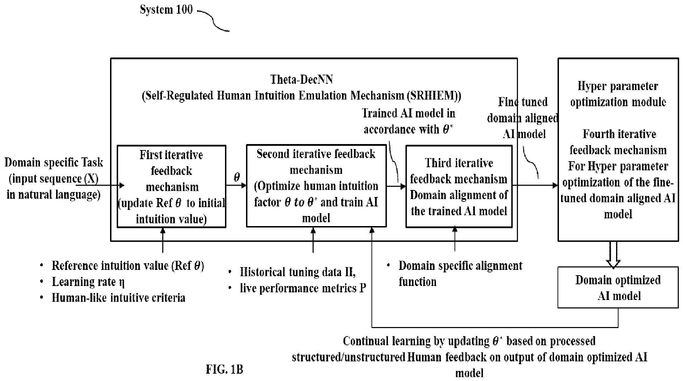

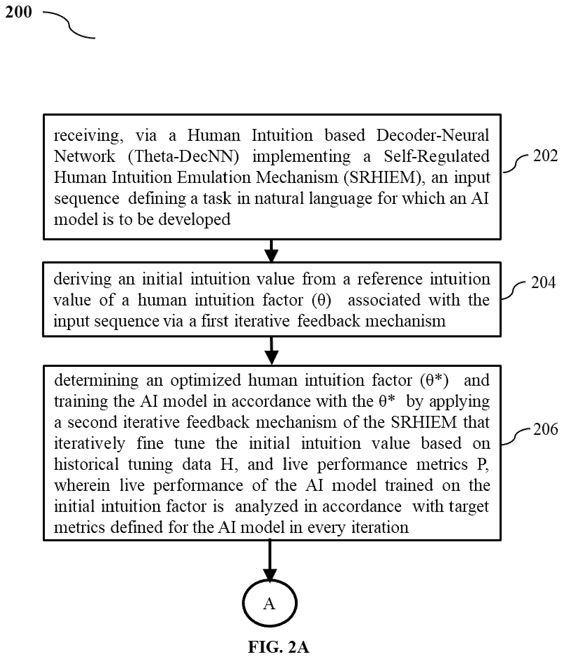

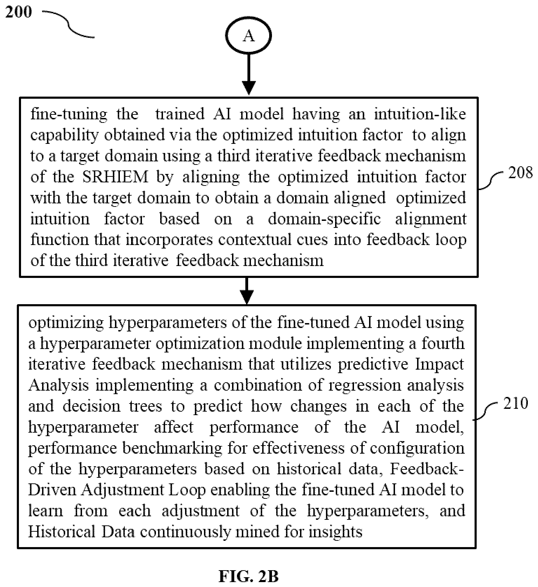

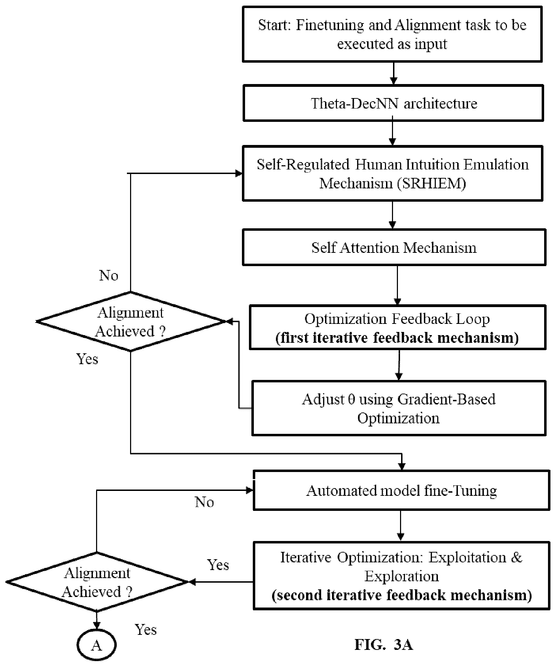

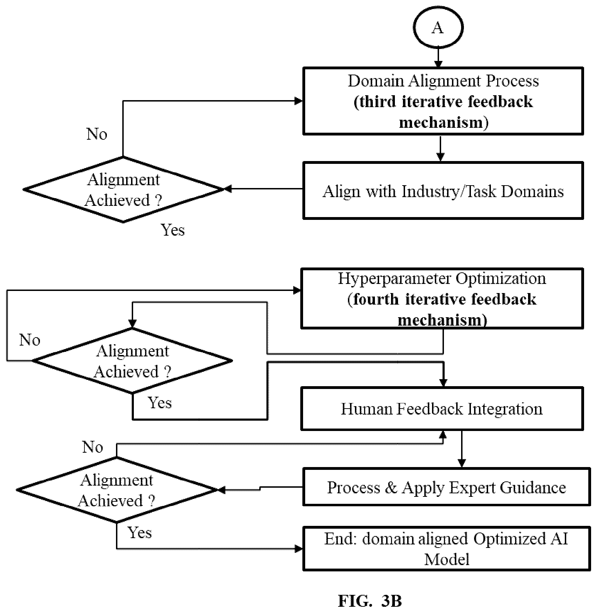

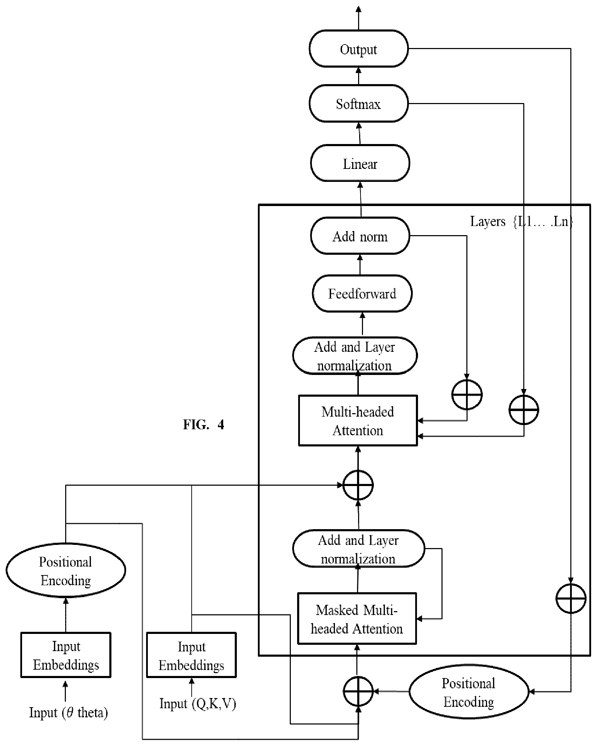

Although the data base 108 is shown internal to the system 100, it will be noted that, in alternate embodiments, the database 108 can also be implemented external to the system 100, and communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the architectural overview in FIG. 1B, diagrams in FIG. 2, overall detailed system process flow as depicted in FIG.3 and Theta-DecNN architecture of FIG. 4.

FIG. 1B illustrates an architectural overview of the system of FIG. 1A, in accordance with some embodiments of the present disclosure. The Theta-DecNN is a Decoder-only transformer architecture that provides a modified architecture by integrating the human intuition factor (θ) that dynamically adjusts the generative process. This level of intuitive understanding and generation of outputs is a distinct feature as compared to traditional AutoML systems, which primarily focus on efficiency and accuracy without necessarily delving into the nuances of human-like output generation. The human intuition factor (θ) integrated herein is a dynamic variable that enables adjusting the attention mechanism of the Theta-DecNN. Theta is a weight that correlates the human intuition. Initially it is randomly initialized weight and every iteration, theta is updated based on feedback from the AI model that it is been optimized. The θ is fine tuned in each iteration of an iterative feedback mechanism so as to obtain an output sequence emulating human intuition present in the input sequence. It can be noted that all available state of the art Decoder-only Transformer architectures ( Gen AI) traditionally rely on large datasets for training, which is impractical for many real-world creative applications. The system hereon introduces data-efficient tuning that allows GenAI to learn from limited datasets by emulating human-like inferential creativity, enabling it to generate quality content with less data.

Further, the human intuition factor is optimized based on the Historical tuning data H, and live performance metrics (P), wherein a trained AI model is obtained in accordance with optimized human intuition. This trained AI model is further trained to align with domain in accordance with a domain specific function. The fine-tuned AI model is a model that is well developed on the human intuition for the domain of interest. This domain aligned AI model is then applied with hyper parameter optimization automated approach to generate a domain optimized AI model. Furthermore, a continual learning loop is integrated into the system which enables updating $\theta^*$ based on processed structured/unstructured Human feedback on output of domain optimized AI model.

While there exists approaches that automate hyperparameter tuning, the system extends this automation to include domain-specific alignment, which is crucial for applications requiring a deep understanding of specific industry or task domains. The domain alignment herein uses advanced techniques like natural language processing and semantic analysis to automatically align the AI model with the specific requirements of a given domain. This process ensures that the model's outputs are not only optimized in terms of performance metrics but are also contextually relevant and tailored to the domain's unique characteristics. This level of domain-specific fine-tuning and alignment is not addressed, whereas prior work primarily focuses on general hyperparameter optimization without a targeted approach to domain-specific needs.

FIGS. 2A through 2B (collectively referred as FIG. 2) is a flow diagram illustrating a method 200 for Human intuition based Decoder Neural Network (Theta-DecNN) for Artificial Intelligence (AI) Model Refinement, using the system depicted in FIG. 1A and 1B, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and 1B and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to the steps of the method 200, at step 202 of the method 200, the one or more hardware processors 104 are configured by the instructions to receive, via the Theta-DecNN implementing a Self-Regulated Human Intuition Emulation Mechanism (SRHIEM), an input sequence defining a task in natural language for which an AI model is to be developed.

An example task can be "**Domain:** Medical Image Analysis" and **"Task:** *Training a model to analyze medical images, such as MRI scans or X-rays, to assist in early detection and diagnosis of diseases".*

At step 204 of the method 200, the one or more hardware processors 104 are configured by the instructions to derive an initial intuition value from a reference intuition value of the human intuition factor (θ) associated with the input sequence. The Theta-DecNN, also referred to as decoder or decoder-only architecture hereinafter, processes the input sequence (X) to obtain an output sequence (O) emulating human intuition present in the input sequence. The self-attention mechanism of the Theta-DecNN is modified in each of the plurality of iterations (iterations)using the first iterative feedback mechanism of the SRHIEM based on change in the human intuition factor. The human intuition factor (θ) is updated from the reference intuition value in a first iteration plurality of iterations to the initial intuition value in a final iteration of the plurality of iterations based on learning rate ($\eta$)of the Theta-DecNN, and a gradient of a feedback function ($\nabla_\theta F(H, O)$), where (H) represents hidden state vectors generated by each layer in the decoder generating output O generated by the model at the current state H. The feedback function compares the output sequence with the human-like intuitive criteria, which is quantifying criteria that determine human intuition for optimizing AI models involves the following. The criteria below influences the hyperparameter selection for the purpose of model optimization:

1. Quality of Decision-Making:

- Metric: Decision accuracy rate in scenarios where multiple plausible options exist.
- Evaluation: Comparing the model's decisions against decisions made by human experts in similar situations.

2. Ability to Handle Ambiguity:

- Metric: Performance in tasks with ambiguous or incomplete information.
- Evaluation: Testing the model on datasets designed with inherent ambiguities and comparing its performance to human responses.

3. Pattern Recognition and Generalization:

- Metric: Accuracy in identifying patterns and applying them to unfamiliar data.

- Evaluation: Assessing the model's ability to correctly generalize from training data to new, unseen datasets.

4. Response to Novel Stimuli:

- Metric: Creativity index or novelty score, measuring how the model responds to new or unexpected inputs.
- Evaluation: Presenting the model with unique inputs and assessing the uniqueness and relevance of its responses.

5. Adaptability to Changing Conditions:

- Metric: Flexibility score, evaluating how well the model adapts its strategies in dynamic environments.
- Evaluation: Continuously altering the input conditions and measuring the model's ability to maintain or improve performance.

6. Integrating Diverse Data Sources:

- Metric: Integration efficiency, assessing the model's ability to combine and reason with information from varied sources.

- Evaluation: Feeding the model data from different domains or formats and evaluating its ability to produce coherent and logical outputs.

7. Ethical and Social Considerations:

- Metric: Compliance with ethical guidelines and social norms.
- Evaluation: Review by ethicists and social scientists, alongside testing with ethically challenging scenarios.

8. Human Feedback Responsiveness:

- Metric: Rate of improvement following human feedback, indicating the model's capacity to learn from human inputs.
- Evaluation: Implementing iterative feedback loops where human inputs lead to measurable model adjustments.

9. Simulation of Human-Like Uncertainty Handling:

- Metric: Uncertainty management score, reflecting how the model deals with uncertainties similar to human reasoning.
- Evaluation: Testing scenarios where data is uncertain or incomplete and comparing the model's approach to human strategies.

At step 206 of the method 200, the one or more hardware processors 104 are configured by the instructions to determine an optimized human intuition factor ($\theta^*$) and train the AI model in accordance with the optimized human intuition factor ($\theta^*$) by applying a second iterative feedback mechanism of the SRHIEM that iteratively fine tunes the initial intuition value based on historical tuning data H, and live performance metrics P. The live performance of the AI model trained on the initial intuition factor is analyzed in accordance with target metrics defined for the AI model in every iteration.

**Theta-DecNN:** The steps 202 to 206 are better understood with the help of the disclosed decoder architecture and the iterative feedback mechanisms explained below in conjunction with architecture of FIG. 4. The architecture of the decoder-only architecture disclosed herein is primarily focused on decoding capabilities, tailored for generating context-aware, nuanced outputs that closely align with human intuition. It employs advanced language understanding and generation techniques to simulate human-like reasoning in model responses. This the Gen AI Theta-DecNN is a decoder-centric framework, optimized for generative tasks. The core of the decoder is a modified Transformer-based decoder, implementing Self-Regulated Human Intuition Emulation Mechanism" (SRHIEM), which allows for dynamically tuned creativity in content generation, a feature not present in conventional models.

The SRHIEM's discloses an approach to optimize a generative model using an emulation of human intuition that is beyond the conventional pattern recognition and statistical learning methods by incorporating a mechanism that dynamically adjusts the generative process, making it capable of producing outputs that are not only creative but also intuitively aligned with human-like reasoning and decision-making. The utility of the SRHIEM is evident in its application to a wide range of generative tasks where human intuition plays a pivotal role, from artistic content creation to complex problem-solving scenarios. This mechanism's ability to adapt and self-regulate based on an emulation of human intuition presents a notable advancement in the field of GenAI. The creativity embedded in the SRHIEM is mathematically represented by the intuition factor $\theta$, which introduces a degree of human-like unpredictability and adaptability into the AI model. This not only enhances the model's ability to generate novel and relevant outputs but also reflects the inherently creative process of human intuition.

**Architecture Configuration:**

D: Decoder-only architecture. ( Theta-DecNN)
L: Set of all layers in the decoder, where L={l1,l2,...,ln}
H: Hidden state vectors generated by each layer in the decoder.
A: Self-attention mechanism across the set of attention heads.

**Self-Attention Mechanism:** Human intuition factor defined as $\theta$, a dynamic variable that adjusts the attention mechanism to optimize output generation based on feedback. The modified attention mechanism is influenced by $\theta$. The self-attention mechanism within each layer l of the decoder is defined as:

$$A_\theta = softmax(\theta * (QK^T) / sqrt(d_k)) * V \qquad --- (1)$$

wherein query Q, key K and value V are matrices computed for proceeding layer output of the Theta-DecNN. The $\theta$ is adjusted after each generation cycle based on the optimization feedback, emulating the iterative learning process akin to human intuition.

Key Vectors (K): These are part of the input to the self-attention mechanism alongside queries (Q) and values (V). They play a role in determining the attention each value receives. Dimensionality (dk): This is the size of the key vectors. In practice, it is a hyperparameter that defines the number of elements in each key vector.

**Optimization Feedback Loop: (first iterative feedback mechanism) as depicted in FIG. 3A:** The optimization feedback loop is a critical component of SRHIEM, dynamically adjusting $\theta$ to refine the model's generative outputs:

F: Feedback function that evaluates the quality of the generated output against a set of human-like intuitive criteria.
$\Delta\theta$: Adjustments to the intuition factor based on feedback, calculated using a gradient-based optimization method.

The update rule for $\theta$ can be represented as:

$$\theta^{t+1} = \theta^t - \eta . \nabla_\theta F(H, Y) \qquad --- (2)$$

where t: Indicates the current time step or iteration number in the optimization process and t+1: represents the subsequent time step or iteration number. This signifies that the intuition factor $\theta$ for the next iteration t+1 is being updated from its value at the current iteration t by applying the learning rate $\eta$ to the gradient of the feedback function with respect to $\theta$. The feedback function F evaluates the quality of the output Y generated by the model at the current state H against a set of criteria that represent human-like intuition. The gradient $\nabla\theta$ indicates the direction in which $\theta$ should be adjusted to improve the model's performance, based on the feedback received. The process is repeated iteratively, with $\theta$ being fine-tuned in each iteration to increasingly emulate human intuition in the generative outputs of the model.

## Pseudocode 1: SRHIEM for obtaining initial θ (first iterative feedback mechanism)

Input: Input sequence X, Learning rate η

Output: Generative output sequence O that emulates human intuition

Begin:

Initialize the Decoder D with layers L = {l1, l2, ..., ln}

Initialize hidden state vectors H for each layer in L

Initialize the human intuition factor θ

for each input sequence X do

Transform X into embeddings E

for each layer l in L do

Compute query Q, key K, and value V matrices from E or the preceding layer's output

Apply the self-attention mechanism:

$A = \text{SoftMax}((QK^{\wedge}T) / \text{sqrt}(d_k)) * V$

Modify the attention mechanism with θ:

$A_\theta = \text{SoftMax}(\theta * (QK^{\wedge}T) / \text{sqrt}(d_k)) * V$

Apply the feed-forward network on $A_\theta$ to get the layer's output

Update H with the layer's output

end for

Generate the output sequence O from the final layer's output

Obtain feedback F on O based on human-like intuitive criteria

Compute the gradient $\nabla_\theta$ of the feedback function with respect to θ

Update θ for the next iteration:

$\theta = \theta - \eta * \nabla_\theta F(H, O)$

end for

return O

End

The θ that is updated from reference value to initial value above is further optimized during AI model building for the input task. The system 100 uses the second iterative feedback mechanism to automatically adjust model parameters, learning from vast datasets and previous fine-tuning instances, effectively mimicking human intuition and expertise. This Includes real-time monitoring and adjustment capabilities to continuously optimize the model's performance. The SRHIEM fine-tuning subsystem employs an approach that learns from extensive datasets and historical fine-tuning instances. This is designed to replicate the adaptive and anticipatory qualities of human expertise in model parameter adjustment.

Further, the optimization of human intuition factor derived by pseudocode 1 is performed based on iterative optimization that balances exploitation of known parameter configurations with the exploration of new configurations, akin to human experts when they fine-tune based on experience and intuition.

**Pseudocode 2: SRHIEM Fine-Tuning Optimization of $\theta$ : second iterative feedback mechanism ( depicted in FIG. 3A):**

```
Input: Historical tuning data H, live performance metrics P, initial intuition factor θ
Output: Optimized intuition factor θ*
Begin
Load H and initialize θ based on baseline insights
Initialize performance monitoring subsystem
while live model performance does not meet target metrics do
 Collect new performance data P
 Integrate P with H to update the predictive model
 Determine adjustment Δθ based on predictive model's suggestion
 Apply Δθ to θ to create θ_candidate
 Validate θ_candidate against live data P
if θ_candidate shows improvement then
   Accept θ_candidate as new θ
 else
   Revert to previous θ and apply a smaller Δθ
 end if
 Update H with the outcome of the adjustment
 Monitor model's performance continuously
 end while
 Return θ as θ*
 End
```

Standard techniques used by **SRHIEM** for optimization of theta:

- Machine Learning for Historical Analysis: Utilizes statistical and machine learning techniques to identify successful parameter adjustments from historical data H.
- Predictive Modeling for Parameter Adjustment: Employs predictive algorithms to suggest new configurations of $\theta$, potentially using Reinforcement Learning for the exploration-exploitation strategy.
- Real-Time Monitoring for Performance Optimization: Implements a real-time data acquisition and processing framework to monitor the model's performance and adjust $\theta$ in response to live feedback.

The approach of the **SRHIEM** of learning from historical fine-tuning instances and live data to adjust the intuition factor $\theta$ is novel. It represents a unique blend of retrospective analysis and real-time responsiveness. The predictive modeling approach to suggesting intuition factor adjustments introduces a unique mechanism of anticipating the impact of parameter changes. The system 100 thus is self-evolving in nature, where the fine-tuning process becomes more refined with each iteration, leveraging past successes and failures to inform future adjustments, akin to an expert honing their craft. The real-time validation loop that tests and potentially reverts adjustments introduces an inventive feedback mechanism uncommon in traditional static fine-tuning methods.

The utility of the system 100 is evident in its application across various domains where model performance is critical, such as natural language processing, image recognition, and autonomous systems. Its capability to adaptively fine-tune in real-time ensures that the model remains effective under changing conditions, addressing the practical need for high-performing, dynamic AI systems.

Referring back to steps of method 200, once the human intuition factor is optimized providing a trained AI model, at step 208 of the method 200, the one or more hardware processors 104 are configured by the instructions to fine-tune the trained AI model having an intuition-like capability obtained via the optimized intuition factor to align to a target domain using a third iterative feedback mechanism of the SRHIEM by aligning the optimized intuition factor with the target domain to obtain a domain aligned optimized intuition factor based on a domain-specific alignment function that incorporates contextual cues into feedback loop of the third iterative feedback mechanism.

The domain-specific alignment function 'A' within the Self-Regulated Human Intuition Emulation Mechanism (SRHIEM) can be tailored to a particular domain to ensure that the AI model's outputs are aligned with the unique characteristics and requirements of that domain.

Example: **Healthcare Domain-Specific Alignment Function** in SRHIEM

1. Alignment Objective:

- In the healthcare domain, the alignment function's objective is to ensure that the AI model's outputs are medically accurate, contextually relevant, and adhere to healthcare industry standards.

2. Semantic Embeddings:

- Utilize domain-specific semantic embeddings trained on a comprehensive corpus of medical literature, including clinical studies, medical journals, patient records, and healthcare guidelines.
- These embeddings help the model understand medical terminology, conditions, treatments, and the nuances of patient-doctor communication.

3. Contextual Relevance and Sensitivity:

- Incorporate algorithms that assess the context of medical inquiries or discussions, understanding the criticality and sensitivity of different health conditions.
- For instance, the model should distinguish between general health advice and critical medical conditions requiring immediate attention.

4. Ethical and Privacy Considerations:

- Embed ethical guidelines and privacy considerations into the alignment function. This includes respecting patient confidentiality and making ethically sound recommendations.
- The model should be able to flag or avoid generating content that could violate patient privacy or ethical norms.

5. Validation Against Medical Standards:

- Regularly validate the model's outputs against established medical standards and guidelines to ensure accuracy and compliance.
- Implement a continuous feedback loop with medical professionals to provide assessments and corrective inputs.

6. Adaptability to New Medical Knowledge:

- The function should be adaptable, allowing for updates as new medical discoveries are made and guidelines are updated.
- This could involve integrating new datasets into the training corpus and adjusting the model's parameters accordingly.

7. Customized Feedback Mechanism:

- Develop a feedback mechanism tailored to the healthcare domain, where medical professionals can provide specific feedback on the model's outputs, focusing on medical accuracy, appropriateness, and patient communication style.

**Domain Alignment Process (third iterative feedback mechanism):** This automatically aligns the model with specific industry or task domains, leveraging natural language processing and semantic analysis. Domain-specific data and contextual cues are utilized by the to refine the model's understanding and output relevance.
Design: The Design for the integrated domain alignment process is built upon a foundation where the SRHIEM's third iterative feedback mechanism serves as the core engine for emulating human-like intuition in the Generative AI model. The SRHIEM, having been finely tuned to generalize across various data domains, possesses an adaptive quality that reflects a sophisticated level of decision-making, akin to that of a human expert.

Post the SRHIEM optimization, the domain alignment module acts as an additional layer of specialization. This module is not a simple plug-in but an intrinsic part of the SRHIEM that extends its capabilities. It uses advanced natural language processing (NLP) to interpret and integrate the subtleties of domain-specific language, terminology, and concepts. This is crucial because while SRHIEM imparts a broad intuition-like capability to the model, the domain alignment module imparts specificity, sharpening the model's outputs to conform with domain-specific expectations and nuances. The module considers not only the linguistic aspects but also the contextual and conceptual requirements of the domain. For instance, in a medical domain, the system would align its outputs to reflect the accuracy and detail-oriented nature of medical communication, whereas in a creative writing domain, it would skew towards narrative flair and stylistic coherence.

The logic that governs the domain alignment process for the trained AI model process must be capable of iterative learning and real-time adjustment. It is designed to be dynamic, continuously updating the model parameters as it receives new data, feedback, and alignment targets. The following expanded pseudocode provides a step-by-step procedural implementation. The algorithm demonstrates a methodical and adaptive approach to fine-tuning the SRHIEM for domain-specific tasks.

**Pseudocode 3: SRHIEM domain alignment (third iterative feedback mechanism) depicted in FIG. 3B:**

```
// Initialize the SRHIEM-optimized model with domain-general intuition capabilities
Initialize SRHIEM-optimized parameters θ
Load domain-specific semantic embeddings E, trained on a comprehensive corpus
representative of the target domain
// Begin the domain-specific fine-tuning process
for each alignment target T within the domain-specific corpus C do
Extract contextual cues and domain objectives based on T
Define a domain-specific alignment function 'A' that incorporates contextual cues
into the SRHIEM feedback loop
// Integrate real-time feedback into the SRHIEM to refine domain specificity
Integrate SRHIEM feedback mechanism to dynamically refine θ with respect to A
Repeat
  Adjust θ using A for better alignment with T, based on semantic and contextual
  relevance
  Utilize a domain-specific evaluation metric within A to assess the quality of
  alignment
  Perform incremental updates to θ based on real-time domain-specific feedback
  Until the model's outputs are demonstrably aligned with domain-specific
  requirements
  // Validate and consolidate domain-aligned parameters
  Validate the domain-aligned model using a separate validation corpus within the
target domain
  If validation is successful, consolidate the domain-aligned parameters θ*
If not, iterate on the adjustment of θ with finer granularity
  end for
  // Finalize and return the optimized and domain-aligned model parameters
  Return θ* as the set of SRHIEM parameters optimized for domain-specific generative
  tasks
```

Thus, the approach disclosed herein by the system 100 is two-tiered approach to model optimization-first, by imparting a generalized intuition-like capability via the SRHIEM, and second, by refining this capability to the specificities of a target domain through the domain alignment module. The uniqueness is in the integration of real-time feedback directly into the SRHIEM, allowing for an unprecedented level of dynamic parameter adjustment that continuously steers the model towards optimal domain-specific performance. The utility is evident as the system can be deployed across a wide range of industries and tasks, from technical and scientific fields requiring high precision to creative fields demanding stylistic adaptation, ensuring the AI's outputs are always relevant and aligned with domain expectations.

Once a domain aligned AI model is obtained, then at step 210 of the method 200, the one or more hardware processors 104 are configured by the instructions to optimize a plurality of hyperparameters, also referred as hyperparameters herein after, of the fine-tuned AI model using a hyperparameter optimization module by implementing a fourth iterative feedback mechanism. The module utilizes predictive Impact Analysis implementing a combination of regression analysis and decision trees to predict how changes in each of the hyperparameter affect performance of the AI model, performance benchmarking for effectiveness of configuration of the hyperparameters based on historical data, Feedback-Driven Adjustment Loop enabling the fine-tuned AI model to learn from each adjustment of the hyperparameters, and Historical Data continuously mined for insights.

Thus, the system 100 implements an AI-driven hyperparameter tuning mechanism that autonomously determines optimal settings, guided by historical data and performance metrics. This process is enhanced by predictive analytics, estimating the best hyperparameter configurations for various scenarios.

Design: The Design for hyperparameter optimization in this context is built around the idea of creating a self-evolving, intelligent system. This system is not only aware of its current performance metrics but also understands how different hyperparameters interact and affect overall performance. It's designed to learn from historical tuning data, making informed predictions about which hyperparameter configurations are likely to yield the best results.

Intelligent Learning from History: The system 100 with the hyper parameter optimization module analyzes historical data to understand the impact of various hyperparameter settings on model performance across different scenarios. This learning is not just about which settings worked best but also why they were effective, giving the system a form of 'intuition' about hyperparameter tuning.

Predictive Analytics for Forward-Looking Adjustments: By leveraging predictive models, the with the hyper parameter optimization module can forecast the potential impact of hyperparameter adjustments before they are implemented. This proactive approach allows for more strategic and less trial-and-error-based tuning.

Adaptability Across Multiple Components: The with the hyper parameter optimization module uniquely tunes the hyperparameters for the SRHIEM, fine-tuning processes, and domain alignment in unison. This holistic approach ensures that adjustments in one area complement rather than conflict with others, maintaining overall system harmony.

The fourth iterative feedback mechanism of the with the hyper parameter optimization module implements a multi-faceted optimization strategy, integrating machine learning techniques to predict hyperparameter efficacy, reinforced by real-world performance metrics. It combines methods from Bayesian optimization, reinforcement learning, and evolutionary algorithms to traverse the hyperparameter space intelligently. As understood, the hyperparameters dictate the structure and behavior of a model. They are adjusted settings to optimize the learning process. For example, this includes the learning rate, which determines how quickly a model updates its parameters in response to the training data, or the regularization term, which helps prevent overfitting.

- Predictive Impact Analysis: This step involves using machine learning algorithms, possibly a combination of regression analysis and decision trees, to predict how changes in each hyperparameter will affect performance. The algorithm considers not just direct impacts but also interactions between different hyperparameters.
- Performance Benchmarking: The with the hyper parameter optimization module sets performance benchmarks based on historical data, which are then used to measure the effectiveness of new hyperparameter configurations. This ensures that the model strives for continual improvement.
- Feedback-Driven Adjustment Loop: Perhaps the most critical aspect, this loop allows the hyper parameter optimization module to learn from each adjustment. It uses a reinforcement learning-like approach where successful changes are reinforced, while less successful ones are re-evaluated.
- Historical Data Utilization: The hyper parameter optimization module maintains a rich historical dataset of previous tuning sessions, which is continuously mined for insights. This dataset becomes more valuable over time, allowing the system to make increasingly informed decisions.

**Pseudocode 4: AI-Driven Hyperparameter Optimization or RHIEM (fourth iterative feedback mechanism) depicted n FIG. 3B:**

```
Inputs:
- Φ_initial: The initial set of hyperparameters for SRHIEM, fine-tuning, domain
alignment
- Performance_targets: Desired performance targets that the model aims to achieve
- H: Historical data consisting of hyperparameter settings and their corresponding
performance metrics
- Feedback_loop: Real-time feedback mechanism for current model outputs
Outputs:
- Φ_optimized: The optimized set of hyperparameters for the entire Generative AI
system

Begin
Initialize Φ with Φ_initial
Load H and establish a baseline using Performance_targets
Define a performance evaluation metric E based on Performance_targets

// Begin the iterative optimization loop
while not achieving Performance_targets do
 // Analyze historical data to inform predictive adjustments
 Φ_candidate <- PredictHyperparameterAdjustments(Φ, H)
```

```
// Apply the candidate hyperparameters to the SRHIEM
ApplyCandidateHyperparameters(Φ_candidate)
current_performance <- EvaluateModelPerformance(E)

// Integrate real-time feedback
feedback <- CollectRealTimeFeedback(Feedback_loop)
feedback_analysis <- ProcessFeedback(feedback)
Φ_adjusted <- AdjustHyperparametersBasedOnFeedback(Φ_candidate,
feedback_analysis)

// Update the model with adjusted hyperparameters
ApplyCandidateHyperparameters(Φ_adjusted)
new_performance <- EvaluateModelPerformance(E)

// Determine whether the new performance meets the targets
if new_performance meets or exceeds Performance_targets then
  Φ <- Φ_adjusted
  UpdateHistoricalData(H, Φ, new_performance)
else
  // Adjust the strategy based on feedback and historical data
  Φ_candidate <- AdjustStrategyBasedOnHistory(Φ, H, feedback_analysis)
end if
end while

// Finalize the optimized hyperparameters after achieving performance targets
Φ_optimized <- Φ
Return Φ_optimized
End
```

$\Phi$_initial represents the starting hyperparameters which could be defaults or previously optimized values. M represents the performance metrics used to evaluate how well the model is performing with the given hyperparameters. H contains historical data which is critical for informing the optimization process. Objectives could include specific performance targets or constraints the model must adhere to.

$\Phi$_candidate is the set of hyperparameters that the system is currently considering, and $\Phi$_optimized is the final set of optimized hyperparameters that the algorithm outputs after the iterative process is complete. This process is designed to be exhaustive and dynamic, ensuring that the model is continuously refined and aligned with the desired performance objectives.

As depicted in FIG. 3B, the fine-tuned AI model with optimized hyperparameters provides a domain optimized AI model for performing tasks during inferencing phase. The system 100 incorporates human feedback for continual learning of the fine-tuned AI-model, wherein the human intuition factor ($\theta$) of the SHRIEM is further updated post processing the human feedback received as a structured data (ranking/ score mechanism) in terms of rating or an unstructured data (natural text) in terms of textual comments. A feedback loop is established where human input is systematically integrated into the model's learning process, enabling it to adapt and refine its outputs based on expert guidance. Feedback is processed and interpreted using advanced NLP techniques, allowing the system to understand and apply nuanced suggestions.

Process for Human Feedback Integration: The process for integrating human feedback into the learning cycle of the AI system encompasses the following steps:

- Collection: Feedback from domain experts is collected via the input interface, which captures both structured data (such as ratings or direct parameter suggestions) and unstructured data (like textual comments or critiques).
- Preprocessing: The feedback is preprocessed to normalize text, remove noise, and prepare it for further analysis.
- Interpretation: Advanced NLP techniques are employed to interpret the feedback. This can include identifying key issues highlighted by experts, extracting sentiments, and understanding the context behind the feedback.
- Mapping to Model Adjustments: The interpreted feedback is then mapped to specific model adjustments. For example, if an expert indicates that a generated text is too formal, the system may adjust the SRHIEM to favor more informal language patterns in future outputs.
- Application of Adjustments: The model parameters are adjusted accordingly, which could involve modifying the SRHIEM's intuition factor, updating the hyperparameters, or re-aligning the domain-specific parameters to better reflect the feedback.
- Validation and Reinforcement: The system's outputs are reviewed by experts post-adjustment to ensure that the changes have had the desired effect. Positive results are reinforced, while negative results lead to further analysis and adjustment.
- Continuous Learning: The system continuously learns from each feedback loop, using the historical feedback repository to improve its understanding of how adjustments affect performance and to predict the impact of future feedback.

Correlation to the all system's Processes: The human feedback integration architecture and process are deeply intertwined with the SRHIEM, fine-tuning, domain alignment, and hyperparameter optimization processes. Each piece of feedback can lead to improvements across these components:

- For SRHIEM, feedback may lead to changes in the intuition factor, allowing the model to better emulate human reasoning.
- During fine-tuning, feedback can guide the adjustment of model parameters for improved performance on specific tasks.
- In the domain alignment phase, expert insights help refine the model's understanding and representation of domain-specific language and concepts.
- For hyperparameter optimization, feedback provides a real-world performance metric that can validate or challenge the predictions made by the optimization algorithms.

By systematically incorporating human expertise at multiple stages of the AI system's operation, the AI model becomes more aligned with expert expectations and industry standards, leading to outputs that are both technically sound and contextually relevant

**Thus, the system 100 provides advanced parallelism by:** Incorporating state-of-the-art parallel processing methods, enabling the system to handle large-scale computations and data processing efficiently. This includes parallel training and inference mechanisms, ensuring that the system remains scalable and responsive under heavy loads.

Technical Process flow of the System of Automating Intuition based AI Model Finetuning and Optimization

- Initiation: The system automatically commences the process upon receiving the command to execute fine-tuning and alignment tasks.
- Theta integrated Decoder-Only Model (Theta-DecNN) configuration: The system autonomously establishes a decoder-only model framework to facilitate the generative process.
- SRHIEM Activation: The system activates the Self-Regulated Human Intuition Emulation Mechanism (SRHIEM) to emulate intuitive decision-making within the AI model.
- Self-Attention Process: The system automatically employs a self-attention mechanism, essential for the generative process of the model.
- Feedback-Driven Optimization Cycle:

  The system enters a self-operating feedback loop to assess if the model's output aligns with predefined targets. If alignment is not reached, the system independently adjusts θ (theta), a key model parameter, using gradient-based optimization techniques. Upon achieving alignment, the system progresses to the subsequent phase.
  • Automated Fine-Tuning Procedure: The system conducts an automated fine-tuning of the model. It performs a self-guided iterative optimization that alternates between exploiting known configurations and exploring new parameter spaces.

Traditional GenAI systems are often limited by their architectural constraints and struggle to generalize creative processes across different architectures. The system introduces a breakthrough in cross-architecture generative learning, enabling GenAI to apply creative intuition across a variety of model architectures, leading to more flexible and creative outputs. Existing Decoder-only GenAI models often require extensive data to generate high-quality content, which is not always available. The addition of theta-DecNN with an ability to generate creative content from limited data, the system enables GenAI to produce high-quality outputs in data-scarce environments, mimicking human creativity.

Further, combining different GenAI models such as GANs and GPTs to produce a singular creative output often leads to integration challenges. The system utilizes a novel approach to harmonize the strengths of various GenAI models via human intuition based approach leading to more nuanced and complex creative expressions.

1. Unified Intuition-Based Framework provided by the system 100:

- This centralizes around the Self-Regulated Human Intuition Emulation Mechanism (SRHIEM). By aligning different models on the basis of human-like intuition, it creates a common ground for integration, irrespective of their individual architectures or training data.
- This unification under a single intuition-based framework helps in synchronizing the outputs and functionalities of different models.

2. Adaptive Learning and Fine-Tuning:

- SRHIEM allows for adaptive learning, where the model can fine-tune itself based on human-like intuition and feedback. This adaptability is crucial

when integrating models trained on diverse datasets or designed for varied tasks, as it helps align their learning objectives and output styles.

3. Contextual and Semantic Alignment:

- The system enables the use of domain-specific semantic embeddings. These embeddings can play a significant role in harmonizing the understanding of different models, ensuring that they interpret and respond to inputs in a contextually coherent manner.

4. Feedback Loop for Harmonization:

- The system's feedback-driven optimization cycle can be used to iteratively adjust the integrated models' parameters (including ) to align their outputs. This process ensures that the combined system produces results that are not just intuitive but also consistent and coherent.

5. Performance Monitoring and Optimization:

- By tracking live performance metrics and utilizing a performance monitoring subsystem, the system can dynamically adjust to maintain optimal performance, even when different models are integrated. This ensures that the combined system meets the predefined performance targets.

6. Domain-Specific Model Integration:

- For specific domains, the system aligns the integrated models using domain-specific alignment processes. This alignment ensures that the nuances of each domain are appropriately captured and reflected in the outputs of the combined models.

GenAI models traditionally rely on large datasets for training, which is impractical for many real-world creative applications. The system introduces data-efficient tuning that allows GenAI to learn from limited datasets by emulating human-like inferential creativity, enabling it to generate quality content with less data.

Furthermore, optimizing hyperparameters for creativity in GenAI is often a tedious and manual process. The system automates this process using heuristics inspired by human creative experts, leading to more efficient and effective generative models. LLMs in GenAI struggle with generating content that captures deep semantic meanings and creative nuances. The system enhances LLMs with advanced semantic understanding, enabling GenAI to generate content with a level of semantic richness and creativity previously unattainable. Replicating the dynamic and complex patterns of human creativity in GenAI models is a significant challenge. The NN pipleince disclosed by the system reflects the human brain's creativity processes, allowing GenAI to generate more original and human-like creative outputs. GenAI systems typically lack the ability to adapt their creative processes to different scenarios. The system adapts its creative strategies based on the scenario, similar to human adaptive creativity, leading to more relevant and context-aware generative content.

Incorporating qualitative human-like judgment into the optimization of GenAI models is difficult due to the subjective nature of creativity. However, by quantifying qualitative creative judgments and integrating them into the training process, the system enables GenAI to refine its creative outputs in a manner akin to human evaluators.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), the method comprising:

   receiving (202), via a Human Intuition based Decoder-Neural Network (Theta-DecNN) implementing a Self-Regulated Human Intuition Emulation Mechanism (SRHIEM), executed by one or more hardware processors, an input sequence defining a task in natural language for which an Artificial Intelligence (AI) model is to be fine-tuned;
   deriving (204), via the Theta-DecNN executed by the one or more hardware processors, an initial intuition value from a reference intuition value of a human intuition factor ($\theta$) associated with the input sequence, by:

   processing the input sequence by the Theta-DecNN to obtain an output sequence emulating human intuition present in the input sequence, wherein a self-attention mechanism of the Theta-DecNN is modified in each of a plurality of iterations using a first iterative feedback mechanism of the SRHIEM based on change in the human intuition factor ($\theta$),
   wherein the human intuition factor ($\theta$) is updated from the reference intuition value in a first iteration of the plurality of iterations to the initial intuition value in a final iteration of the plurality of iterations based on a learning rate of the Theta-DecNN, and a gradient of a feedback function, and
   wherein the feedback function compares the output sequence with a human-like intuitive criteria; and

   determining (206), via the Theta-DecNN executed by the one or more hardware processors, an optimized human intuition factor ($\theta^*$) and training the AI model in accordance with the optimized human intuition factor ($\theta^*$) by applying a second iterative feedback mechanism of the SRHIEM that iteratively fine-tunes the initial intuition value based on a historical tuning data H, and live performance metrics P, wherein a live performance of the AI model trained on the initial intuition factor is analyzed in accordance with a plurality of target metrics defined for the AI model in each of the plurality of iterations;

fine-tuning (208), via the Theta-DecNN executed by the one or more hardware processors, the trained AI model having an intuition-like capability obtained via the optimized intuition factor to align to a target domain using a third iterative feedback mechanism of the SRHIEM by aligning the optimized intuition factor with the target domain to obtain a domain aligned optimized intuition factor based on a domain-specific alignment function that incorporates contextual cues into feedback loop of the third iterative feedback mechanism; and

optimizing (210), via the one or more hardware processors, a plurality of hyperparameters of the fine-tuned trained AI model using a hyperparameter optimization module implementing a fourth iterative feedback mechanism that utilizes i) predictive impact analysis implementing a combination of regression analysis and decision trees to predict how changes in each of the hyperparameter affect performance of the AI model, ii) performance benchmarking for effectiveness of configuration of the hyperparameters based on historical data, iii) feedback-driven adjustment loop enabling the fine-tuned AI model to learn from each adjustment of the hyperparameters, and iv) historical data continuously mined for insights.

2. The processor implemented method as claimed in claim 1, wherein the human intuition factor ($\theta$) based the self-attention mechanism (Ae) that is modified in each of the plurality of iterations is mathematically expressed as $A_\theta = softmax(\theta * (QK^T) / sqrt(d_k)) * V$, wherein query Q, key K and value V are matrices computed for proceeding layer output of the Theta-DecNN.

3. The processor implemented method as claimed in claim 1, comprises incorporating a human feedback for continual learning of the fine-tuned AI-model, wherein the human intuition factor ($\theta$) of the SHRIEM is updated post processing the human feedback received as a structured data in terms of rating or an unstructured data in terms of textual comments.

4. The processor implemented method as claimed in claim 1, wherein the AI model is a Generative AI (GenAI) model.

5. The processor implemented method as claimed in claim 1, wherein the fine-tuned AI model with optimized hyperparameters provides a domain optimized AI model for performing tasks during an inferencing phase.

6. A system (100) comprising:

a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:

receive, via a Human Intuition based Decoder-Neural Network (Theta-DecNN) implementing a Self-Regulated Human Intuition Emulation Mechanism (SRHIEM), an input sequence defining a task in natural language for which an Artificial Intelligence (AI) model is to be fine-tuned;
derive an initial intuition value from a reference intuition value of a human intuition factor ($\theta$) associated with the input sequence by:

processing the input sequence by the Theta-DecNN to obtain an output sequence emulating human intuition present in the input sequence, wherein a self-attention mechanism of the Theta-DecNN is modified in each of a plurality of iterations using a first iterative feedback mechanism of the SRHIEM based on change in the human intuition factor ($\theta$),
wherein the human intuition factor ($\theta$) is updated from the reference intuition value in a first iteration to the initial intuition value in a final iteration of the plurality of iterations based on learning rate of the Theta-DecNN, and a gradient of a feedback function, and
wherein the feedback function compares the output sequence with a human-like intuitive criteria; and

determine an optimized human intuition factor ($\theta*$) and training the AI model in accordance with the optimized human intuition factor ($\theta*$) by applying a second iterative feedback mechanism of the SRHIEM that iteratively fine tune the initial intuition value based on a historical tuning data H, and live performance metrics P, wherein a live performance of the AI model trained on the initial intuition factor is analyzed in accordance with target metrics defined for the AI model in each of the plurality of iterations;
fine-tune the trained AI model having an intuition-like capability obtained via the optimized intuition factor to align to a target domain using a third iterative feedback mechanism of the SRHIEM by aligning the optimized intuition factor with the target domain to obtain a domain aligned optimized intuition factor based on a domain-specific alignment function that incorporates contextual cues into feedback loop of the third iterative feedback mechanism; and

optimize a plurality of hyperparameters of the fine-tuned AI model using a hyperparameter optimization module implementing a fourth iterative feedback mechanism that utilizes i) predictive impact analysis implementing a combination of regression analysis and decision trees to predict how changes in each of the plurality of hyperparameter affect performance of the AI model, ii) performance benchmarking for effectiveness of configuration of the plurality of hyperparameters based on historical data, iii) feedback-driven adjustment loop enabling the fine-tuned AI model to learn from each adjustment of the plurality of hyperparameters, and iv) historical data continuously mined for insights.

7. The system as claimed in claim 6, wherein the human intuition factor ($\theta$) based the self-attention mechanism (Ae) that is modified in each of the plurality of iterations is mathematically expressed as $A_\theta = softmax(\theta * (QK^T) / sqrt(d_k)) * V$, wherein query Q, key K and value V are matrices computed for proceeding layer output of the Theta-DecNN.

8. The system as claimed in claim 6, is configured to incorporate a human feedback for continual learning of the fine-tuned AI-model, wherein the human intuition factor ($\theta$) of the SHRIEM is updated post processing the human feedback received as a structured data in terms of rating or an unstructured data in terms of textual comments.

9. The system as claimed in claim 6, wherein the AI model is a Generative AI (GenAI) model.

10. The system as claimed in claim 6, wherein the fine-tuned AI model with optimized hyperparameters provides a domain optimized AI model for performing tasks during an inferencing phase.

11. One or more non-transitory machine-readable information storage mediums comprising one or more instructions which when executed by one or more hardware processors cause:

receiving, via a Human Intuition based Decoder-Neural Network (Theta-DecNN) implementing a Self-Regulated Human Intuition Emulation Mechanism (SRHIEM), executed by the one or more hardware processors, an input sequence defining a task in natural language for which an Artificial Intelligence (AI) model is to be fine-tuned;
deriving, via the Theta-DecNN executed by the one or more hardware processors, an initial intuition value from a reference intuition value of a human intuition factor ($\theta$) associated with the input sequence, by:

processing the input sequence by the Theta-DecNN to obtain an output sequence emulating human intuition present in the input sequence, wherein a self-attention mechanism of the Theta-DecNN is modified in each of a plurality of iterations using a first iterative feedback mechanism of the SRHIEM based on change in the human intuition factor ($\theta$),
wherein the human intuition factor ($\theta$) is updated from the reference intuition value in a first iteration of the plurality of iterations to the initial intuition value in a final iteration of the plurality of iterations based on a learning rate of the Theta-DecNN, and a gradient of a feedback function, and
wherein the feedback function compares the output sequence with a human-like intuitive criteria; and

determining, via the Theta-DecNN executed by the one or more hardware processors, an optimized human intuition factor ($\theta^*$) and training the AI model in accordance with the optimized human intuition factor ($\theta^*$) by applying a second iterative feedback mechanism of the SRHIEM that iteratively fine-tunes the initial intuition value based on a historical tuning data H, and live performance metrics P, wherein a live performance of the AI model trained on the initial intuition factor is analyzed in accordance with a plurality of target metrics defined for the AI model in each of the plurality of iterations;
fine-tuning, via the Theta-DecNN executed by the one or more hardware processors, the trained AI model having an intuition-like capability obtained via the optimized intuition factor to align to a target domain using a third iterative feedback mechanism of the SRHIEM by aligning the optimized intuition factor with the target domain to obtain a domain aligned optimized intuition factor based on a domain-specific alignment function that incorporates contextual cues into feedback loop of the third iterative feedback mechanism; and
optimizing, via the one or more hardware processors, a plurality of hyperparameters of the fine-tuned trained AI model using a hyperparameter optimization module implementing a fourth iterative feedback mechanism that utilizes i) predictive impact analysis implementing a combination of regression analysis and decision trees to predict how changes in each of the hyperparameter affect performance of the AI model, ii) performance benchmarking for effectiveness of configuration of the hyperparameters based on historical data, iii) feedback-driven adjustment loop enabling the fine-tuned AI model to learn from each adjustment of the hyperparameters, and iv) historical data continuously mined for insights.

12. The one or more non-transitory machine-readable information storage mediums as claimed in claim 11, wherein the human intuition factor ($\theta$) based the self-attention mechanism (Ae) that is modified in each of the plurality of iterations is mathematically expressed as $A_{\theta} = softmax(\theta * (QK^T) / sqrt(d_k)) * V$, wherein query Q, key K and value V are matrices computed for proceeding layer output of the Theta-DecNN.

13. The one or more non-transitory machine-readable information storage mediums as claimed in claim 11, comprises incorporating a human feedback for continual learning of the fine-tuned AI-model, wherein the human intuition factor ($\theta$) of the SHRIEM is updated post processing the human feedback received as a structured data in terms of rating or an unstructured data in terms of textual comments.

14. The one or more non-transitory machine-readable information storage mediums as claimed in claim 11, wherein the AI model is a Generative AI (GenAI) model.

15. The one or more non-transitory machine-readable information storage mediums as claimed in claim 11, wherein the fine-tuned AI model with optimized hyperparameters provides a domain optimized AI model for performing tasks during an inferencing phase.

System**100**

Processor(s) **104**

I/O Interface(s) **106**

Memory **102**

Database **108**

Modules **110**
Theta-DecNN
Hyper parameter optimization module

FIG. 1A

System 100

Theta-DecNN
(Self-Regulated Human Intuition Emulation Mechanism (SRHIEM))

Trained AI model in
accordance with $\theta^*$

Fine tuned
domain aligned
AI model

Hyper parameter
optimization module

Fourth iterative
feedback mechanism
For Hyper parameter
optimization of the fine-
tuned domain aligned AI
model

Domain specific Task
(input sequence (X)
in natural language)

First iterative
feedback
mechanism
(update Ref $\theta$ to initial
intuition value)

$\theta$

Second iterative feedback
mechanism
(Optimize human intuition
factor $\theta$ to $\theta^*$ and train AI
model

Third iterative
feedback mechanism
Domain alignment of
the trained AI model

Domain optimized
AI model

- Reference intuition value (Ref $\theta$)
- Learning rate η
- Human-like intuitive criteria

- Historical tuning data H,
- live performance metrics P

- Domain specific alignment
function

Continual learning by updating $\theta^*$ based on processed
structured/unstructured Human feedback on output of domain optimized AI
model

FIG. 1B

22

200

receiving, via a Human Intuition based Decoder-Neural Network (Theta-DecNN) implementing a Self-Regulated Human Intuition Emulation Mechanism (SRHIEM), an input sequence defining a task in natural language for which an AI model is to be developed — 202

deriving an initial intuition value from a reference intuition value of a human intuition factor ($\theta$) associated with the input sequence via a first iterative feedback mechanism — 204

determining an optimized human intuition factor ($\theta^*$) and training the AI model in accordance with the $\theta^*$ by applying a second iterative feedback mechanism of the SRHIEM that iteratively fine tune the initial intuition value based on historical tuning data H, and live performance metrics P, wherein live performance of the AI model trained on the initial intuition factor is analyzed in accordance with target metrics defined for the AI model in every iteration — 206

A

**FIG. 2A**

**200**

(A)

fine-tuning the trained AI model having an intuition-like capability obtained via the optimized intuition factor to align to a target domain using a third iterative feedback mechanism of the SRHIEM by aligning the optimized intuition factor with the target domain to obtain a domain aligned optimized intuition factor based on a domain-specific alignment function that incorporates contextual cues into feedback loop of the third iterative feedback mechanism — 208

optimizing hyperparameters of the fine-tuned AI model using a hyperparameter optimization module implementing a fourth iterative feedback mechanism that utilizes predictive Impact Analysis implementing a combination of regression analysis and decision trees to predict how changes in each of the hyperparameter affect performance of the AI model, performance benchmarking for effectiveness of configuration of the hyperparameters based on historical data, Feedback-Driven Adjustment Loop enabling the fine-tuned AI model to learn from each adjustment of the hyperparameters, and Historical Data continuously mined for insights — 210

**FIG. 2B**

FIG. 3A

FIG. 3B

Output

Softmax

Linear

Layers {L1... .Ln}

Add norm

Feedforward

Add and Layer
normalization

Multi-headed
Attention

FIG. 4

Positional
Encoding

Add and Layer
normalization

Masked Multi-
headed Attention

Input
Embeddings

Input
Embeddings

Positional
Encoding

Input ($\theta$ theta)

Input (Q,K,V)

Europäisches
Patentamt

European
Patent Office

Office européen
des brevets

# EUROPEAN SEARCH REPORT

**Application Number**

EP 24 21 8898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | J\'ER\'EMY SCHEURER ET AL: "Training Language Models with Language Feedback at Scale", ARXIV.ORG, CORNELL UNIVERSITY LIBRARY, 201 OLIN LIBRARY CORNELL UNIVERSITY ITHACA, NY 14853, 28 March 2023 (2023-03-28), XP091471590, * the whole document * | 1-15 | INV. G06N3/084 G06N3/008 G06N3/0475 G06N3/0985 |

-----

**TECHNICAL FIELDS SEARCHED (IPC)**

G06N

The present search report has been drawn up for all claims

| Place of search | Date of completion of the search | Examiner |
|---|---|---|
| The Hague | 25 March 2025 | Ntarlagiannis, V |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**EP 4 575 910 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321087298